# FASCICULE DE BREVET EUROPEEN

(11) **EP 2 834 202 B1**
(45) Date de publication et mention de la délivrance du brevet: **12.06.2019**
(21) Numéro de dépôt: 13713890.5
(22) Date de dépôt: 03.04.2013
(51) Int. Cl.: C03C 3/087, C03C 4/00

(54) **FEUILLE DE VERRE À HAUTE TRANSMISSION ÉNERGÉTIQUE**
GLASSCHEIBE MIT HOHER ENERGIEÜBERTRAGUNG
SHEET OF GLASS WITH HIGH ENERGY TRANSMISSION

(30) Priorité: 04.04.2012 BE 201200233
(43) Date de publication de la demande: 11.02.2015
(73) Titulaire: AGC Glass Europe, 1348 Louvain-La-Neuve (BE)
(72) Inventeur: DOGIMONT, Audrey, B-1150 Woluwe-Saint-Pierre (BE); HENNECKER, Sébastien, B-6210 Rèves (BE); LAMBRICHT, Thomas, B-1348 Louvain-la-Neuve (BE)
(74) Mandataire: Bayot, Daisy
(86) Numéro de dépôt international: PCT/EP2013/056989
(87) Numéro de publication internationale: WO 2013/150053

(56) Documents cités:
- EP-A1- 1 477 464
- US-A- 3 351 474
- US-A- 5 674 791
- US-A1- 2007 015 654
- US-A1- 2010 297 415

## Description

### 1. Domaine de l'invention

Le domaine de l'invention est celui des verres à haute transmission énergétique, utilisables notamment dans les modules photovoltaïques ou les miroirs solaires. L'invention concerne également des verres à haute transmission lumineuse, utilisables dans le domaine architectural.

### 2. Solutions de l'art antérieur

Dans le domaine du solaire où le verre est utilisé comme substrat pour des miroirs solaires ou recouvrant des cellules photovoltaïques, il est bien entendu extrêmement avantageux que le verre employé, qui doit être traversé par les rayonnements du soleil, présente une transmission visible et/ou énergétique très élevée. L'efficacité d'une cellule solaire est en effet significativement améliorée par une augmentation même très faible de cette transmission. En particulier, une transmission énergétique supérieure à 89%, de préférence supérieure à 90% ou même supérieure à 91% est hautement désirée.

Pour quantifier la transmission du verre dans le domaine englobant le visible et l'infrarouge solaire (ou proche infrarouge) ainsi qu'une partie des ultraviolets, on définit une transmission énergétique (TE), mesurée selon la norme ISO9050 entre les longueurs d'onde de 300 et 2500 nm. Dans la présente description ainsi que dans les revendications, la transmission énergétique est mesurée selon cette norme et donnée pour une épaisseur de 3,85 mm.

Pour quantifier la transmission du verre dans le domaine du visible, on définit une transmission lumineuse (TL), calculée entre les longueurs d'onde de 380 et 780 nm selon la norme ISO9050, et mesurée avec l'illuminant D65 (TLD) tel que défini par la norme ISO/CIE 10526 en considérant l'observateur de référence colorimétrique C. I. E. 1931 tel que défini par la norme ISO/CIE 10527.

Pour quantifier la couleur du verre dans le visible, on définit une longueur d'onde dominante (DWL). Celle-ci est basée sur un document de la C. I. E. : "Colorimétrie, Recommandations Officielles de la C.I.E." (mai 1970) qui permet de positionner la couleur sur un diagramme trichromatique C. I. E 1931.L'illuminant C, 2° est utilisé pour définir la couleur. Dans la présente description ainsi que dans les revendications, la longueur d'onde dominante est exprimée en nanomètre (nm) pour une épaisseur de 5 mm et calculée sur base de la transmission spécifique interne spectrale qui est régie uniquement par l'absorption du verre et peut être exprimée par la loi de Beer-Lambert.

Dans la présente description ainsi que dans les revendications, la longueur d'onde dominante est exprimée pour une épaisseur de 5 mm et calculée sur base de la transmission spécifique interne spectrale.

Dans la présente description ainsi que dans les revendications, la transmission lumineuse est mesurée selon cette norme et donnée pour une épaisseur de 4 mm sous un angle d'observation solide de 2°.

Pour obtenir des valeurs de TL et/ou TE supérieures à 89% voire supérieures à 90%, il est connu de l'état de la technique de diminuer la teneur totale en fer dans le verre (exprimée en terme de Fe₂O₃ selon la pratique standard dans le domaine), voir par exemple US 2007/0015654. Les verres silico-sodo-calciques dits « clairs » ou « extra-clairs » contiennent toujours du fer car celui-ci est présent comme impureté dans la plupart des matières premières utilisées (sable, calcaire, dolomie...). Le fer existe dans la structure du verre sous la forme d'ions ferriques Fe³⁺ et d'ions ferreux Fe²⁺. La présence d'ions ferriques Fe³⁺ confère au verre une légère absorption de la lumière visible de faible longueur d'onde et une plus forte absorption dans le proche ultraviolet (bande d'absorption centrée sur 380 nm), tandis que la présence d'ions ferreux Fe²⁺ (parfois exprimée en oxyde FeO) provoque une forte absorption dans le proche infrarouge (bande d'absorption centrée sur 1050 nm). Les ions ferriques Fe³⁺ procurent au verre une légère coloration jaune tandis que les ions ferreux Fe²⁺ donnent une coloration bleu-vert prononcée. Ainsi, l'augmentation de la teneur en fer totale (sous ses deux formes) accentue l'absorption dans le visible et l'infrarouge, au détriment de la transmission lumineuse et énergétique. De plus, une forte concentration en ions ferreux Fe²⁺ entraîne une diminution de la transmission énergétique et lumineuse. Il est ainsi également connu, pour augmenter davantage la transmission énergétique et lumineuse du verre, d'oxyder le fer présent dans le verre, c'est-à-dire de diminuer la teneur en ions ferreux au profit de la teneur en ions ferriques qui absorbent moins. Le degré d'oxydation d'un verre est donné par son rédox, défini comme le rapport en poids d'atome de Fe²⁺ par rapport au poids total des atomes de fer présents dans le verre, Fe²⁺/Fe total.

Afin de diminuer le rédox du verre, plusieurs solutions ont été proposées.

Il est par exemple connu de US 7482294 d'ajouter au verre de l'oxyde de cérium (CeO₂). Celui-ci est toutefois très onéreux, peut engendrer une coloration indésirable du verre mais surtout est à l'origine du phénomène dit de "solarisation" dans lequel la transmission énergétique du verre diminue très fortement dans le temps du fait de l'exposition aux rayonnements ultraviolets présents notamment dans les rayons du soleil.

Il est également connu d'ajouter au verre des oxydes d'antimoine qui sont capables d'oxyder le fer contenu dans le verre. Toutefois, il est connu que l'antimoine n'est pas compatible avec le procédé de formage du verre par procédé de flottage. De plus son prix et les quantités nécessaires à une bonne oxydation du verre en rendent l'usage extrêmement cher pour les applications solaires.

Il n'existe donc pas à ce jour, de solution acceptable pour diminuer le rédox d'un verre « extra-clair » (basse teneur en fer) afin d'en augmenter sa transmission énergétique et lumineuse. Il existe donc un réel besoin de solution technique afin d'augmenter la transmission énergétique (produit à haute valeur ajoutée) ou diminuer le rédox, et donc l'impact du fer, tout en maintenant une haute transmission énergétique et ainsi diminuer les coûts de fabrication d'un tel verre grâce notamment à l'utilisation de matières premières moins pures et moins chères.

D'autre part, le verre « extra-clair » est également employé dans le domaine architectural. Il est alors utilisé par exemple comme substrat pour les verres décoratifs convenant à l'aménagement des intérieurs (ou extérieurs) et à l'ameublement ou encore pour des verres à couches telles que les couche à faible émissivité, autonettoyantes, anticondensation ou antiréfléchissantes par exemple. Il ne nécessite alors pas de présenter une transmission énergétique très élevée, mais il est bien entendu extrêmement avantageux que le verre employé dans le domaine architectural, soit extrêmement et présente par ailleurs une légère coloration bleutée afin d'améliorer l'aspect esthétique du verre. L'effet transparent se traduit par une haute transmission lumineuse. Afin d'obtenir la couleur bleutée, il est connu de l'état de la technique d'augmenter le redox du verre, c'est-à-dire augmenter la teneur en ions ferreux Fe²⁺. Cependant, l'augmentation du redox a malheureusement pour conséquence une diminution de la transmission énergétique et lumineuse du verre.

La coloration bleutée peut également être obtenue en ajoutant au verre des agents colorants, tel que le cobalt, de l'oxyde de néodyme et du cuivre, permettant d'obtenir cette coloration bleutée mais leur incorporation dans le verre a pour conséquence directe une diminution de la transmission énergétique de verre. Ceci est par exemple illustré dans la demande EP1477 464A1. Dans ce cas, l'obtention de la couleur bleutée est péjorée par une coloration ambre de la face étain. Il faut alors ajouter des espèces colorantes et diminuer fortement le SO₃ afin de limiter l'impact de la face étain. Ceci a pour conséquence secondaire d'augmenter le redox. Si ceci est favorable à la couleur bleutée désirée, mais est malheureusement à nouveau en conflit avec l'obtention d'une haute transmission lumineuse ou énergétique (redox faible).

Dans l'industrie du verre, la transition entre la fabrication d'un verre solaire « extra-clair » destiné notamment à la fabrication de panneaux photovoltaïques ou de miroirs solaires et la fabrication d'un verre « extra-clair » dit architectural représente un coût important. En effet, le passage d'un verre solaire « extra-clair » à un verre architectural extra-clair dit requiert un temps de transition durant lequel le verre ne répond ni aux exigences de qualité requises pour un verre solaire« extra-clair » (haute transmission énergétique) ni à celles d'un verre architectural (TL et couleur bleutée). Ce verre dit de « transition » n'est malheureusement pas utilisable et représente donc une perte financière pour les industries du verre.

Ainsi, il existe également un besoin de trouver une solution permettant de réduire le temps de transition pour passer de la production d'un verre « extra-clair » pour application solaire à la production d'un verre « extra-clair » pour application architecturale.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une feuille de verre à haute transmission énergétique.

Un autre objectif de l'invention, dans au moins un de ses modes de réalisation, est de fournir une feuille de verre à haute transmission énergétique via une oxydation du verre grâce au cuivre.

Un autre objectif de l'invention, dans au moins un de ses modes de réalisation, est de fournir une feuille de verre à haute transmission lumineuse de couleur bleutée.

Un autre objectif de l'invention, dans au moins un de ses modes de réalisation, est de fournir un moyen qui permette de passer très rapidement d'une production d'un verre « extra-clair » pour application solaire à un verre « extra-clair» pour application architecturale.

Un autre objectif de l'invention est de fournir une solution aux désavantages de l'art antérieur qui soit simple et économique.

### 4. Exposé de l'invention

Conformément à un mode de réalisation particulier, l'invention concerne une feuille de verre ayant une composition qui comprend, en une teneur exprimée en pourcentages en poids total de verre:

| | |
|---|---|
| SiO₂ | 60-78% |
| Al₂O₃ | 0-10% |
| B₂O₃ | 0 - 5% |
| CaO | 0-15% |
| MgO | 0-10% |
| Na₂O | 5-20% |
| K₂O | 0 - 10% |
| BaO | 0 - 5% |
| Fer total (exprimé sous forme de Fe₂O₃) | 0,002 - 0,03%. |

Selon l'invention, une telle composition comprend une teneur en cuivre comprise entre 0,012 et 0,05%, la teneur en cuivre étant exprimée sous forme de Cu en pourcentage en poids par rapport au poids total du verre et un rédox inférieur à 0,3.

Ainsi, l'invention repose sur une approche tout à fait nouvelle et inventive car elle permet de solutionner les inconvénients de l'art antérieur et de résoudre le problème technique posé. Les inventeurs ont en effet mis en évidence de manière surprenante que lors de la fabrication de feuille de verre à haute transmission énergétique et en particulier de feuille de verre extra-clair, qu'il était possible d'obtenir l'effet oxydant du cuivre tout en contrôlant la coloration qu'il peut induire. Les inventeurs ont ainsi découvert qu'une teneur en cuivre de 0.001 à 0,15% en poids par rapport au poids total du verre, associée aux autres critères de composition du verre défini ci-dessus, permettait de diminuer le rédox du verre et donc d'augmenter la transmission énergétique. Les inventeurs ont également découvert qu'une teneur en cuivre de 0,001 à 0.15% en poids par rapport au poids total du verre, associée aux autres critères de composition du verre défini ci-dessus, permettait de réduire, voire supprimer le temps de transition lors du passage de la fabrication d'un verre solaire « extra-clair » à la fabrication d'un verre architectural « extra-clair », tout en garantissant la fabrication d'une feuille de verre « extra-clair » présentant une transmission énergétique et lumineuse élevées. Ceci est d'autant plus surprenant que le cuivre est utilisé dans le domaine du verre comme agent colorant.

Les inventeurs ont ainsi mis en évidence qu'une teneur en cuivre de 0,001 à 0,04% en poids par rapport au poids total du verre permettait d'obtenir un pouvoir oxydant du cuivre en limitant le pouvoir colorant. En effet, les inventeurs ont mis en évidence qu'une teneur de 0,001 à 0,03% en cuivre permettait le gain global le plus élevé en transmission énergétique. Grâce à cette teneur en cuivre, l'augmentation de la transmission due au pouvoir oxydant du cuivre est supérieure à la perte en transmission due au phénomène de coloration. De plus, ils ont découvert que cette teneur en cuivre générait une feuille de verre présentant une stabilité significative de la transmission énergétique dans le temps.

Les inventeurs ont également découvert qu'une teneur en cuivre de 0,01 à 0,15% en poids par rapport au poids total du verre permettait d'obtenir la coloration bleutée désirée pour un verre destiné à une application architecturale tout en conservant une haute transmission lumineuse. Une feuille de verre à haute transmission lumineuse et colorée en bleu est obtenue grâce à une composition comprenant une teneur en cuivre de 0,01 à 0,08% en poids par rapport au poids total du verre. Une feuille de verre à haute transmission lumineuse et colorée en bleu est obtenue grâce à une composition selon l'invention comprenant une teneur en cuivre de 0,012 à 0,05% en poids par rapport au poids total du verre.

Le verre présente un optimum de TE qui est le compromis entre le gain du à la diminution importante du rédox et la coloration de plus en plus intense due à l'ajout de cuivre. En effet, la coloration par le cuivre dépend de son étage d'oxydation, le Cu²⁺ est extrêmement colorant alors que le Cu⁺ n'absorbe que très peu et a un rendu incolore. Dans une première phase, la réaction Cu²⁺ + Fe²⁺ → Cu⁺ + Fe³⁺ est quasiment complète. L'effet oxydant est donc prédominant car le Cu⁺ est incolore. Le gain en transmission est donc totalement lié au gain en redox. A partir d'un certain ratio Cu/Fe₂O₃, la réaction n'est plus complète et l'excédent de cuivre se trouve dans le verre sous la forme de Cu²⁺. La coloration commence donc à apparaitre, même si le redox reste faible. Nous avons alors une descente progressive de la transmission qui coïncide, avec une coloration bleutée de plus en plus prononcée. Le ratio Cu/Fe₂O₃ optimum dépend de l'histoire thermique et chimique du verre. Par exemple, un four de production plus chaud, un temps de résidence plus long dans le four vont affecter l'histoire thermique et donc la position de cet optimum et de l'équilibre qui régit l'apparition du Cu²⁺. De même, pour respecter la stoechiométrie, une quantité de fer plus importante (mid-iron) dans le verre implique de devoir utiliser plus de cuivre pour diminuer le redox de la même ampleur que sur du verre extra-clair et donc à faible teneur en fer (low-iron). La quantité de cuivre nécessaire pour atteindre l'optimum en transmission et pour faire apparaitre le Cu²⁺ est donc plus grande lorsque le taux de fer augmente.

De plus, les inventeurs ont découvert que grâce au recouvrement de ces 2 gammes de teneurs en cuivre à savoir les teneurs en cuivre de 0.001 à 0.05% et 0.01 à 0.15% (pouvoir oxydant versus pouvoir colorant du cuivre), il était possible de répondre aux exigences requises à la fois pour un verre pour une application solaire et pour un verre pour une application architecturale. Ainsi, les temps de transition pour le passage de la fabrication d'un verre solaire « extra-clair » à la fabrication d'un verre architectural « extra-clair » est considérablement réduit, voire supprimé puisque que le même composé, à savoir le cuivre, est utilisé à la fois pour oxyder le verre et pour le colorer.

Un phénomène de coloration excessive du verre par le cuivre est bien entendu problématique dans le cas de verre « extra-clair » (basse teneur en fer) utilisé pour des applications solaires puisqu'il diminue la transmission énergétique. De plus, il est également bien connu de l'état de la technique que le cuivre colore le verre, impactant donc la transmission énergétique du verre, paramètre d'une importance capitale pour du verre dit « extra-clair » utilisé pour des applications solaires. La demande WO 2010/134796 montre par exemple que l'addition du cuivre dans une composition de verre entraine une diminution de la TE et de la TL sans affecter le redox et en colorant le verre. Du fait de ce phénomène de coloration, le cuivre ne consistait donc pas, selon l'état de la technique, en un élément adéquat à ajouter dans une composition de verre solaire « extra-clairs » destinés notamment à la fabrication de panneaux photovoltaïques ou de miroirs solaires.

Dans l'ensemble du présent texte, lorsqu'une gamme est indiquée, les extrémités sont inclues. Dans l'ensemble du présent texte également, les valeurs de teneur en pourcentages sont des valeurs pondérales, exprimées en pourcentage par rapport au poids total du verre.

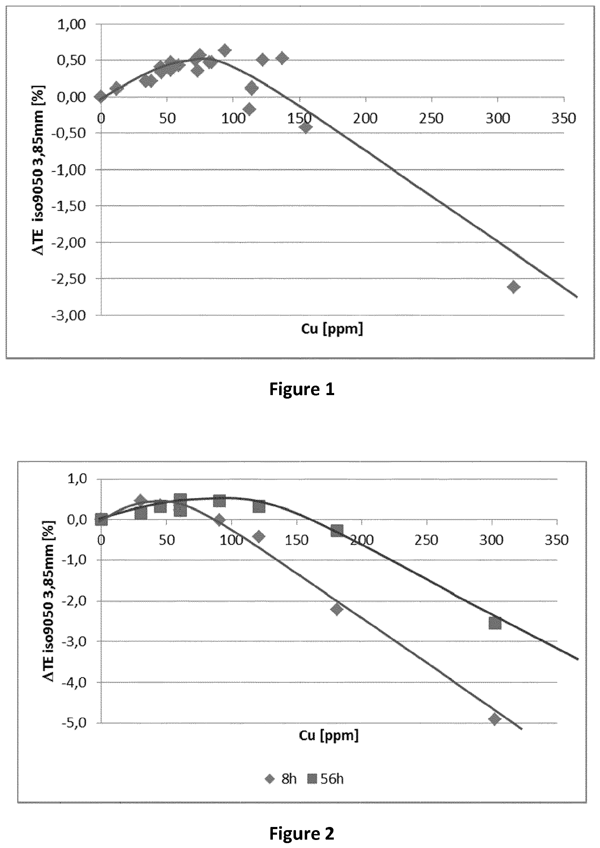

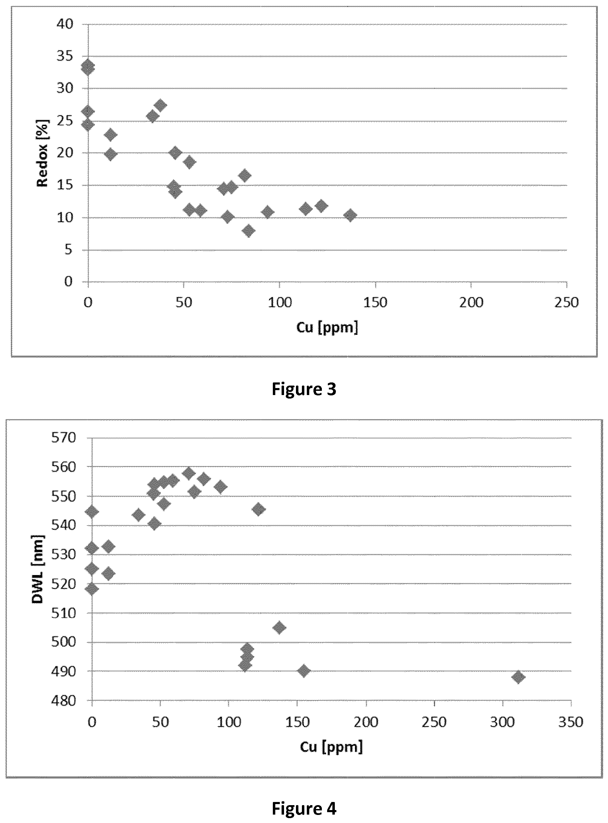

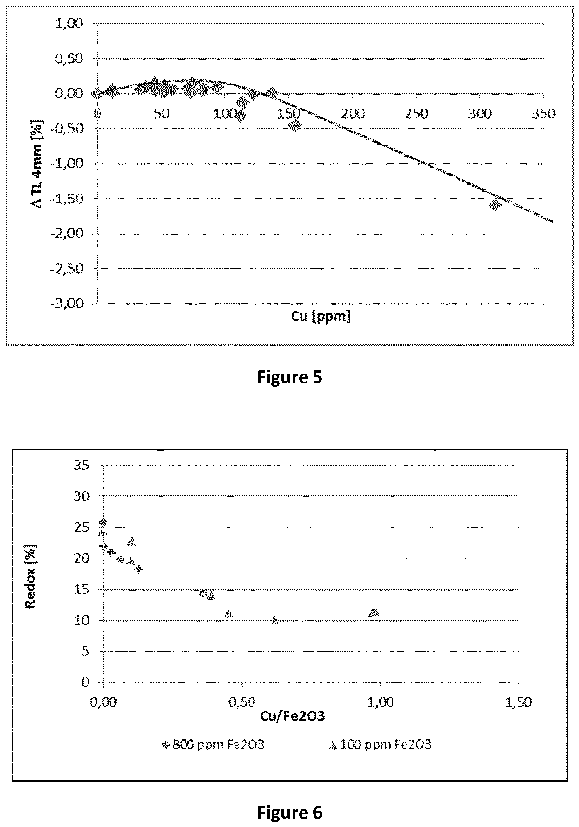

D'autres caractéristiques et avantages de l'invention apparaîtront plus clairement à la lecture de la description suivante et des figures, données à titre d'exemples illustratifs et non limitatifs, parmi lesquelles
**la** **figure 1** représente l'effet de la teneur en cuivre sur la transmission énergétique de feuilles de verre selon l'invention,
**la** **figure 2** représente l'effet de la teneur en cuivre et du temps de passage dans un four sur la transmission énergétique de feuilles de verre selon l'invention,
**la** **figure 3** représente l'effet de la teneur en cuivre sur le rédox des feuilles de verre selon l'invention,
**la** **figure 4** représente l'effet de la teneur en cuivre sur la couleur des feuilles de verre selon l'invention,
**la** **figure 5** représente l'effet de la teneur en cuivre sur la transmission lumineuse du verre,
**la** **figure 6** représente l'effet de la teneur en cuivre par rapport à la teneur en fer sur le redox du verre.

Selon l'invention, la composition présente un rédox inférieur à 0,3. Cette gamme de rédox permet d'obtenir des propriétés optiques très satisfaisantes et en particulier, en termes de transmission énergétique. De préférence, la composition présente un rédox inférieur à 0,25. De manière toute préférée, la composition présente un rédox inférieure à 0,20.

Selon l'invention, la composition comprend une teneur en fer total (exprimée sous forme de Fe₂O₃) allant de 0,002 à 0,03% en poids par rapport au poids total du verre. Cette valeur maximale de teneur en fer total permet d'augmenter de façon significative la transmission énergétique de la feuille de verre par rapport à un verre clair. La valeur minimale permet de ne pas trop pénaliser le coût du verre car de si faibles valeurs nécessitent souvent des matières premières très pures onéreuses ou bien une purification de celles-ci. De préférence, la composition comprend une teneur en fer total (exprimée sous forme de Fe₂O₃) allant de 0,002 à 0,02% en poids par rapport au poids total du verre. Une teneur en fer total (exprimée sous forme de Fe₂O₃) inférieure ou égale à 0,02% en poids permet d'augmenter davantage la transmission énergétique de la feuille de verre. De manière plus préférée, la composition comprend une teneur en fer total (exprimée sous forme de Fe₂O₃) allant de 0,005 à 0,02% en poids par rapport au poids total du verre.

Selon l'invention, la composition de la feuille de verre peut comprendre, en plus des impuretés contenues notamment dans les matières premières, une faible proportion d'additifs (tels que des agents aidant la fusion ou l'affinage du verre) ou d'éléments provenant de la dissolution des réfractaires constituant les fours de fusion.

Pour éviter le phénomène de solarisation et selon un mode de réalisation préférentiel, la composition de la feuille de verre comprend une teneur en cérium (exprimée sous forme de CeO₂) inférieure ou égale à 0,02% en poids par rapport au poids total du verre. De préférence, la composition de la feuille de verre comprend une teneur en cérium (exprimée sous forme de CeO₂) inférieure ou égale à 0,01% en poids par rapport au poids total du verre. De manière plus préférée, la composition de la feuille de verre comprend une teneur en cérium (exprimée sous forme de CeO₂) inférieure ou égale à 0,005% en poids par rapport au poids total du verre. De manière encore plus préférée, la composition de la feuille de verre est exempt de cérium.

Selon un autre mode de réalisation préférentiel, la composition de la feuille de verre comprend une teneur en vanadium (exprimée sous forme de V₂O₅) inférieure ou égale à 0,01% en poids par rapport au poids total du verre. De préférence, la composition de la feuille de verre comprend une teneur en vanadium (exprimée sous forme de V₂O₅) inférieure ou égale à 0,005% en poids par rapport au poids total du verre. De manière encore plus préférée, la composition de la feuille de verre est exempt de vanadium.

Selon encore un autre mode de réalisation préférentiel, la composition comprend une teneur en vanadium (exprimée sous forme de V₂O₅) inférieure ou égale à 0,01% en poids par rapport au poids total du verre et une teneur en cérium (exprimée sous forme de CeO₂) inférieure ou égale à 0,02% en poids par rapport au poids total du verre. De manière préférée, la composition comprend une teneur en vanadium (exprimée sous forme de V₂O₅) inférieure ou égale à 0,005% en poids par rapport au poids total du verre et une teneur en cérium (exprimée sous forme de CeO₂) inférieure ou égale à 0,01% en poids par rapport au poids total du verre. De manière toute préférée, la composition comprend une teneur en vanadium (exprimée sous forme de V₂O₅) inférieure ou égale à 0,005% en poids par rapport au poids total du verre et une teneur en cérium (exprimée sous forme de CeO₂) inférieure ou égale à 0,005% en poids par rapport au poids total du verre. De manière encore plus préférée, la composition est exempt de vanadium et cérium.

Selon encore un autre mode de réalisation préférentiel, la composition de la feuille de verre comprend une teneur en antimoine (exprimée sous forme de Sb₂O₃) inférieure à 0,2% en poids par rapport au poids total du verre. De préférence, la composition de la feuille de verre comprend une teneur en antimoine (exprimée sous forme de Sb₂O₃) inférieure ou égale à 0,15% en poids par rapport au poids total du verre. De manière plus préférée, la composition de la feuille de verre est exempt d'antimoine.

Selon encore un autre mode de réalisation préférentiel, la composition de la feuille de verre comprend une teneur en arsenic (exprimée sous forme de As₂O₃) inférieure à 0,01% en poids par rapport au poids total du verre. De manière préférée, la composition de la feuille de verre est exempt d'arsenic.

Selon encore un autre mode de réalisation préférentiel, la composition de la feuille de verre comprend une teneur en chrome (exprimée sous forme de Cr2O3) inférieure à 0,01% en poids par rapport au poids total du verre.

Selon encore un autre mode de réalisation préférentiel, la composition de la feuille de verre comprend une teneur en SO₃ supérieure à 0,2% en poids par rapport au poids total du verre. Ceci est nécessaire afin de :
- garantir un bon affinage et donc une qualité de verre suffisante,
- d'avoir un effet suffisamment oxydant des sulfates et ne pas engendrer un redox trop haut, ce qui serait en conflit avec l'objectif d'obtenir une haute transmission énergétique et lumineuse du verre.

La feuille de verre selon l'invention a de préférence une transmission énergétique (TE), mesurée pour une épaisseur de 3,85 mm, d'au moins 90%. Avantageusement, la feuille de verre selon l'invention a une transmission énergétique (TE), mesurée pour une épaisseur de 3,85 mm, d'au moins 90,4%, et de préférence d'au moins 90,8%.

La feuille de verre selon l'invention a de préférence une transmission lumineuse, mesurée avec l'illuminant D65 (TLD), selon la norme ISO9050 et pour une épaisseur de 4 mm, d'au moins 90,3 %. Avantageusement, la feuille de verre selon l'invention a une transmission lumineuse (TL), mesurée pour une épaisseur de 4 mm, d'au moins 90,7%, et de préférence d'au moins 91%.

La feuille de verre selon l'invention a de préférence une longueur d'onde dominante telle que définie précédemment inférieure à 510 nm. Avantageusement, la feuille de verre selon l'invention a une longueur d'onde dominante (DWL) inférieure à 500 nm. Cette caractéristique est particulièrement recherchée pour une feuille de verre extra-clair à application architectural.

La feuille de verre selon l'invention peut être une feuille de verre obtenue par un procédé de flottage, de laminage ou tout autre procédé connu pour fabriquer une feuille de verre au départ d'une composition de verre en fusion. Selon un mode de réalisation préférentiel selon l'invention, la feuille de verre est une feuille de verre flotté. Par feuille de verre flotté, on entend une feuille de verre formée par le procédé de flottage (ou « float »), consistant à déverser le verre en fusion sur un bain d'étain fondu, sous conditions réductrices. Une feuille de verre flotté comporte, de façon connue, une face dite « face étain », c'est-à-dire une face enrichie en étain dans la masse du verre proche de la surface de la feuille. Par enrichissement en étain, on entend une augmentation de la concentration en étain par rapport à la composition du verre à coeur qui peut être substantiellement nulle (exempt d'étain) ou non.

Le cuivre peut être incorporé dans la composition selon l'invention sous différentes formes. Il peut s'agir par exemple de CuO, Cu₂O, ou encore CuSO₄.

Dans le cas d'un module photovoltaïque solaire, la feuille de verre selon l'invention constitue de préférence le substrat de protection (ou couvercle) des cellules photovoltaïques.

Selon un mode de réalisation de l'invention, la feuille de verre est revêtue d'au moins une couche mince transparente et conductrice de l'électricité. Ce mode de réalisation est avantageux pour des applications photovoltaïques. Lorsque la feuille de verre est utilisée comme substrat protecteur d'un module photovoltaïque, la couche mince transparente et conductrice est disposée en face interne, c'est-à-dire entre la feuille de verre et les cellules solaires.

Une couche mince transparente et conductrice selon l'invention peut, par exemple, être une couche à base de SnO2:F, de SnO2:Sb ou d'ITO (oxyde d'indium et d'étain), ZnO:Al ou encore ZnO:Ga.

Selon un autre mode de réalisation avantageux de l'invention, la feuille de verre est revêtue d'au moins une couche antirefléchissante (ou antireflet). Ce mode de réalisation est avantageux dans le cas des applications photovoltaïques afin de maximiser la transmission énergétique de la feuille de verre et, par exemple, d'augmenter ainsi l'efficacité du module solaire comportant cette feuille en tant que substrat (ou couvercle) recouvrant des cellules photovoltaïques. Dans des applications dans le domaine solaire (photovoltaïque ou thermique), lorsque la feuille de verre est utilisée comme substrat protecteur, la couche antirefléchissante est disposée en face externe, c'est-à-dire côté ensoleillement.

Une couche antirefléchissante selon l'invention peut, par exemple, être une couche à base de silice poreuse à bas indice de réfraction ou elle peut être constituée de plusieurs strates (empilement), notamment un empilement de couches de matériau diélectrique alternant des couches à bas et hauts indices de réfraction et se terminant par une couche à bas indice de réfraction.

Selon un mode de réalisation, la feuille de verre est revêtue d'au moins une couche mince transparente et conductrice de l'électricité sur une première face et d'au moins une couche antirefléchissante sur l'autre face.

Selon encore un mode de réalisation, la feuille de verre est revêtue d'au moins une couche antirefléchissante sur chacune de ses faces.

Selon un autre mode de réalisation, la feuille de verre est revêtue d'au moins une couche antisalissure. Une telle couche antisalissure peut être combinée à une couche mince transparente et conductrice de l'électricité, déposée sur la face opposée. Une telle couche antisalissure peut également être combinée à une couche antirefléchissante déposée sur la même face, la couche antisalissure étant à l'extérieur de l'empilement et recouvrant donc la couche antirefléchissante.

Selon encore un autre mode de réalisation, la feuille de verre est revêtue d'au moins une couche miroir. Une telle couche miroir est par exemple une couche à base d'argent. Ce mode de réalisation est avantageux dans le cas des applications de miroirs solaires (plans ou paraboliques).

En fonction des applications et/ou des propriétés désirées, d'autres couches peuvent être déposées sur l'une et/ou l'autre face de la feuille de verre selon l'invention.

La feuille de verre selon l'invention peut être intégrée à un vitrage multiple (notamment double ou triple). On entend par vitrage multiple, un vitrage qui comprend au moins deux feuilles de verre ménageant un espace rempli de gaz ou sous vide entre chaque couple de feuilles. La feuille de verre selon l'invention peut également être feuilletée et/ou trempée et/ou durcie et/ou bombée.

L'invention a également pour objet un module photovoltaïque solaire ou un miroir pour la concentration d'énergie solaire, comprenant au moins une feuille de verre selon l'invention.

L'invention a également pour objet toutes les applications architecturales : facades, allèges, double ou triple vitrage. Elle sera également utilisée comme support en verre pour des peintures lorsque le rendu de la peinture ne peut être affecté par le verre (fours, smartphones, ...) ou toutes applications où le rendu esthétique est important. L'invention aura également des applications dans le domaine artistique (sculpture, encadrement, ...). Le domaine automobile peut également bénéficier de cette invention.

Les exemples qui suivent illustrent l'invention, sans intention de limiter de quelque façon sa couverture.

### Exemples

Les exemples suivants sont destinés à montrer l'effet de la teneur en cuivre sur la transmission énergétique obtenu(e), la transmission lumineuse obtenu(e), la couleur du verre et le rédox pour une certaine teneur en cuivre exprimée en pourcentage par rapport au poids total du verre.

Les matières premières ont été mélangées sous forme de poudre et placées en creuset pour la fusion, selon la composition (fer total = 100 ppm) montrée ci-dessous. Le cuivre a été incorporé sous forme de CuO. Pour tous les verres testés, les teneurs des composants ont été maintenues fixes à l'exception de la quantité de cuivre. La teneur en cuivre (exprimée en Cu) exprimée en pourcentage par rapport au poids total du verre est dès lors variable d'un échantillon de verre à l'autre.

| ***Composition*** | Teneur [% en poids] |
|---|---|
| CaO | 9 |
| K₂O | 0,015 |
| Na₂O | 14 |
| SO₃ | 0,3 |
| TiO₂ | 0,015 |
| Al₂O₃ | 0,7 |
| MgO | 4,5 |
| Cuivre (exprimé en Cu) | Variable (de ∼ 0 à 0,035%) |
| Fer total (exprimé en Fe2O3) | 0,01 |

Après la fusion, les propriétés optiques de chaque échantillon de verre sous forme de feuille ont été déterminées et en particulier, la transmission énergétique (TE) a été mesurée selon la norme ISO9050 pour une épaisseur de 3,85 mm. Les valeurs de TE ont été déterminées afin de vérifier si le gain en transmission énergétique du à l'effet oxydant du cuivre est plus grand que la perte en transmission due à la coloration causée par ledit cuivre.

**La** **figure 1** représente l'effet de la teneur en cuivre sur la TE de feuilles de verre selon l'invention. Un ΔTE positif correspond dès lors à un gain en transmission énergétique par rapport à un verre extra-clair usuel et un ΔTE négatif correspond à une perte en transmission énergétique. Selon l'invention, le cuivre ajouté à la composition va réagir avec les ions ferreux selon la réaction suivante :

Fe²⁺ + Cu²⁺ → Fe³⁺ + Cu⁺.

La figure 1 montre que dans un premier temps, la transmission énergétique augmente avec la teneur en cuivre. Cet effet est notamment dû à la diminution du rédox. L'absorption causée par le Cu⁺ est alors négligeable voire nulle, n'impactant alors ni la transmission, ni la couleur du verre. Ensuite, la quantité de cuivre devient trop importante par rapport à la quantité de fer. Ceci conduit ainsi à la formation de Cu²⁺ en excès puisque celui-ci ne réagit plus avec le Fe²⁺. Cette espèce (Cu²⁺) absorbe dans le domaine du visible et confère au verre une coloration bleutée. Ainsi, plus la teneur en cuivre est augmentée, plus l'effet du Cu2+ est accentué, ce qui a pour conséquence une diminution progressive de la transmission énergétique.

L'effet de la teneur en cuivre et du temps de passage dans un four, encore appelé « l'histoire thermique », sur la TE de feuilles de verre selon l'invention ont été également évalués. Les résultats obtenus sont illustrés dans la **figure 2****.** Cette figure montre qu'un optimum de transmission énergétique est obtenu pour des valeurs de cuivre différentes selon l'histoire thermique du verre. L'histoire thermique va en effet agir sur la réaction suivante : Fe²⁺ + Cu²⁺ → Fe³⁺ + Cu⁺ au sein du verre et déplacer ainsi l'équilibre à partir duquel la formation de Cu²⁺ apparait. **La** **figure 2** montre également que la forme réduite Cu+ est favorisée lorsque l'histoire thermique est plus longue retardant ainsi l'apparition de la coloration et permettant d'élargir la gamme sur laquelle le pouvoir oxydant du cuivre est supérieur à son pouvoir colorant vis-à-vis de la TE. Enfin, la **figure** 2 montre que plus l'histoire thermique est longue, plus la teneur en cuivre à ajouter à la composition afin d'atteindre l'optimum en transmission est augmentée. Les résultats illustrés dans la **figure 2** ont été obtenus à partir de feuilles de verre obtenues en laboratoire, toutefois l'histoire thermique de 56h permet de se rapprocher des conditions industrielles. Ainsi, il est entendu que la teneur en cuivre devant être ajoutée à la composition afin d'obtenir de telles valeurs de TE à partir de feuilles de verre produites industriellement peuvent être supérieure à 0,05%. On considère ainsi qu'il faudra au plus trois fois de cuivre plus dans la composition pour obtenir de telles valeurs optimales de TE au niveau industriel (données non montrées). Il est de même entendu que la forme du four de fusion et l'histoire thermique peuvent impacter sur la teneur en cuivre devant être ajoutée à la composition afin d'obtenir une feuille de verre conforme à l'invention.

L'effet de la teneur en cuivre sur le rédox des feuilles de verre selon l'invention a été également mesuré et est illustré dans la **figure 3****.** Ainsi, la **figure 3** montre que plus la teneur en cuivre est élevée plus le redox du verre est faible. Cette diminution du rédox du verre est notamment due à l'oxydation du fer par le cuivre.

La teneur en cuivre a également un effet sur la couleur des feuilles de verre selon l'invention. Cet effet est par exemple illustré dans la **figure 4****.** Les inventeurs ont montré qu'avec l'augmentation de la teneur en cuivre, il y a dans un premier temps une phase où l'effet principal du Cu est l'oxydation du verre, étant entendu l'oxydation du fer ayant pour conséquence l'augmentation de la longueur d'onde dominante du verre par rapport à son état initial car le verre jaunit suite à la diminution de la quantité de Fe²⁺. Plus la teneur en cuivre est augmentée, plus le ratio Cu/Fe₂O₃ augmente. Passé une certaine valeur (dépendante de l'histoire thermique et chimique du verre, ainsi que son taux de fer), du Cu²⁺ apparait dans le verre ce qui a pour conséquence directe une coloration (bleutée) du verre. Ainsi, la longueur d'onde dominante (DWL) est diminuée voire diminuée en dessous de son niveau de référence (sans cuivre) indiquant que la coloration bleutée amenée par le Cu²⁺ est suffisamment élevé pour compenser la coloration jaune due à la forte oxydation du verre. Dans le domaine des verres extra-clairs pour applications dites architecturales, une légère coloration bleutée est fortement appréciée. Cela se traduit notamment par une longueur d'onde dominante inférieure à 510nm, et encore plus préférentiellement inférieure à 500nm.

Les valeurs de TL pour une épaisseur de 4 mm ont également été évaluées pour ces mêmes feuilles de verre. Ainsi, la **figure 5** représente l'effet de la teneur en cuivre sur la transmission lumineuse du verre. De manière similaire à la TE, celle-ci augmente dans un premier temps avec l'ajout de cuivre avant de diminuer suite à une coloration du verre. Un point très désirable lors de la production de verre « extra-clair » à application architecturale est une haute transmission lumineuse et un léger aspect bleuté. Cependant, pour obtenir cet aspect bleuté, les colorants utilisés vont absorber dans le domaine du visible, ce qui aura pour conséquence de diminuer la transmission lumineuse. Le cuivre permet, même dans sa gamme d'effet colorant à savoir 0,01 à 0,15% en poids par rapport au poids total du verre, de conserver une plus haute transmission lumineuse à rendu colorimétrique similaire. En effet, parallèlement à son action colorante, le cuivre oxyde le fer, et rehausse ainsi le niveau de base de transmission lumineuse avant d'absorber la lumière.

Enfin, la **figure 6** représente l'effet de la teneur en cuivre et de la teneur en fer sur le redox. Ainsi, 2 teneurs en fer ont été testées à savoir 100 et 800 ppm (verre extra-clair et verre clair). En effet, plus le verre est riche en fer, plus il faut de cuivre pour obtenir la même diminution en redox. De manière similaire, la quantité à partir de laquelle du Cu²⁺ va apparaitre pour colorer est dépendante de la quantité de fer présent dans le verre puisqu'elle dépend, entre autre, de l'équation Cu²⁺ + Fe²⁺ → Cu⁺ + Fe³⁺. On prouve ainsi que pour un verre mid-iron (par exemple un verre contenant 300 ppm de fer), il faudra plus de cuivre que dans un verre low-iron (trois fois plus dans le cadre de cet exemple si on compare à un low-iron contenant 100 ppm de fer) pour obtenir les mêmes effets sur le redox et atteindre la quantité de cuivre à laquelle commence l'apparition de Cu²⁺ et la coloration. Le cuivre permet donc d'obtenir des feuilles de verre à transmission énergétique équivalente aux performances antérieures et ceci à un moindre coût. Le cuivre permet donc également d'obtenir des feuilles de verre à transmission lumineuse équivalente à celle obtenue avec d'autres agents colorants également à un moindre coût. Ainsi, l'effet oxydant du cuivre améliorant la transmission énergétique et lumineuse de la feuille de verre permettrait de travailler avec des matières premières moins pures et moins chères pour obtenir les mêmes propriétés optiques de transmission.

## Revendications

1. Feuille de verre ayant une composition qui comprend en une teneur exprimée en pourcentages en poids total de verre :
| | |
|---|---|
| SiO₂ | 60 - 78% |
| Al₂O₃ | 0 - 10% |
| B₂O₃ | 0 - 5% |
| CaO | 0 - 15% |
| MgO | 0 - 10% |
| Na₂O | 5 - 20% |
| K₂O | 0 - 10% |
| BaO | 0 - 5% |
| Fer total (exprimé sous forme de Fe₂O₃) | 0,002 - 0,03%, |
| et un redox inférieur à 0,3 | |
**caractérisée en ce que** la composition comprend une teneur en cuivre de de 0,012 à 0,05% en poids par rapport au poids total du verre, la teneur en cuivre étant exprimée sous forme de Cu en pourcentage en poids par rapport au poids total du verre.

2. Feuille de verre selon la revendication précédente, **caractérisée en ce que** la composition comprend une teneur en fer total (exprimée sous forme de Fe2O3) de 0,002 à 0,02% en poids par rapport au poids total du verre.

3. Feuille de verre selon l'une quelconque des revendications précédentes, **caractérisée en ce qu'**elle a une transmission énergétique, mesurée pour une épaisseur de 3,85 mm, d'au moins 90%, de préférence d'au moins 90,4%, et plus préférentiellement d'au moins 90,8%.

4. Feuille de verre selon l'une quelconque des revendications précédentes, **caractérisée en ce qu'**elle a une transmission lumineuse, mesurée pour une épaisseur de 4 mm, d'au moins 90,3%, de préférence d'au moins 90,7%, et plus préférentiellement d'au moins 91%.

5. Feuille de verre selon la revendication 4, **caractérisée en ce qu'**elle a une longueur d'onde dominante inférieure à 510nm, de préférence inférieure à 500nm.

6. Feuille de verre selon l'une quelconque des revendications précédentes, **caractérisée en ce que** la composition présente un redox inférieur à à 0,25 et plus préférentiellement inférieur à 0,20,

7. Feuille de verre selon l'une quelconque des revendications précédentes, **caractérisée en ce que** la composition comprend une teneur en SO₃ supérieure à 0.2% en poids par rapport au poids total du verre,

8. Feuille de verre selon l'une quelconque des revendications précédentes, **caractérisée en ce qu'**elle est revêtue d'au moins une couche mince transparente et conductrice de l'électricité.

9. Module photovoltaïque solaire ou miroir pour la concentration d'énergie solaire, comprenant au moins une feuille de verre selon l'une des revendications 1 à 8 .

10. Utilisation du cuivre en tant qu'agent oxydant dans un procédé de fabrication d'une feuille de verre selon les revendications 1 à 9.

## Patentansprüche

1. Glasscheibe mit einer Zusammensetzung, die einen Gehalt, ausgedrückt in Gewichtsprozent des gesamten Glases, umfasst:
| | |
|---|---|
| SiO₂ | 60 - 78 % |
| Al₂O₃ | 0 - 10 % |
| B₂O₃ | 0 - 5 % |
| CaO | 0 - 15 % |
| MgO | 0 - 10 % |
| Na₂O | 5 - 20 % |
| K₂O | 0 - 10 % |
| BaO | 0 - 5 % |
| gesamtes Eisen (ausgedrückt in der Form von Fe₂O₃) | 0,002 - 0,03 %, |
| und ein Redox von weniger als 0,3, | |
**dadurch gekennzeichnet, dass** die Zusammensetzung einen Kupfergehalt von 0,012 bis 0,05 Gew.-%, im Verhältnis zum Gesamtgewicht des Glases, umfasst, wobei der Kupfergehalt in der Form von Cu in Gewichtsprozent, im Verhältnis zum Gesamtgewicht des Glases, ausgedrückt ist.

2. Glasscheibe nach dem vorhergehenden Anspruch, **dadurch gekennzeichnet, dass** die Zusammensetzung einen Gesamteisengehalt (ausgedrückt in der Form von Fe₂O₃) von 0,002 bis 0,02 Gew.-%, im Verhältnis zum Gesamtgewicht des Glases, umfasst.

3. Glasscheibe nach einem der vorhergehenden Ansprüche, **dadurch gekennzeichnet, dass** diese eine Energieübertragung, gemessen für eine Dicke von 3,85 mm, von mindestens 90 %, vorzugsweise mindestens 90,4 % und bevorzugter von mindestens 90,8 % aufweist.

4. Glasscheibe nach einem der vorhergehenden Ansprüche, **dadurch gekennzeichnet, dass** diese eine Lichtdurchlässigkeit, gemessen für eine Dicke von 4 mm, von mindestens 90,3 %, vorzugsweise mindestens 90,7 % und bevorzugter mindestens 91 % aufweist.

5. Glasscheibe nach Anspruch 4, **dadurch gekennzeichnet, dass** diese eine dominante Wellenlänge von weniger als 510 nm, vorzugsweise weniger als 500 nm, aufweist.

6. Glasscheibe nach einem der vorhergehenden Ansprüche, **dadurch gekennzeichnet, dass** die Zusammensetzung ein Redox von weniger als 0,25 und bevorzugter weniger als 0,20 aufweist.

7. Glasscheibe nach einem der vorhergehenden Ansprüche, **dadurch gekennzeichnet, dass** die Zusammensetzung einen Gehalt an SO₃ von mehr als 0,2 Gew.-%, im Verhältnis zum Gesamtgewicht des Glases, umfasst.

8. Glasscheibe nach einem der vorhergehenden Ansprüche, **dadurch gekennzeichnet, dass** diese mit mindestens einer transparenten und elektrisch leitfähigen dünnen Schicht beschichtet ist.

9. Solar- oder Spiegel-Photovoltaikmodul zur Konzentration von Sonnenenergie, umfassend mindestens eine Glasscheibe nach einem der Ansprüche 1 bis 8.

10. Verwendung von Kupfer als Oxidationsmittel in einem Verfahren zur Herstellung einer Glasscheibe nach den Ansprüchen 1 bis 9.

## Claims

1. Sheet of glass having a composition that comprises, in contents expressed as percentages of total weight of glass:
| | |
|---|---|
| SiO₂ | 60-78% |
| Al₂O₃ | 0-10% |
| B₂O₃ | 0-5% |
| CaO | 0-15% |
| MgO | 0-10% |
| Na₂O | 5-20% |
| K₂O | 0-10% |
| BaO | 0-5% |
| Total iron (expressed in the form of Fe₂O₃) and a redox below 0.3, | 0.002-0.03%, |
**characterized in that** the composition comprises a copper content from 0.012 to 0.05% by weight relative to the total weight of the glass, the copper content being expressed in the form of Cu as percentage by weight relative to the total weight of the glass.

2. Sheet of glass according to the preceding claim, **characterized in that** the composition comprises a total iron content (expressed in the form of Fe₂O₃) from 0.002 to 0.02% by weight relative to the total weight of the glass.

3. Sheet of glass according to either one of the preceding claims, **characterized in that** it has an energy transmission, measured for a thickness of 3.85 mm, of at least 90%, preferably of at least 90.4%, and more preferably of at least 90.8%.

4. Sheet of glass according to any one of the preceding claims, **characterized in that** it has a light transmission, measured for a thickness of 4 mm, of at least 90.3%, preferably of at least 90.7%, and more preferably of at least 91%.

5. Sheet of glass according to Claim 4, **characterized in that** it has a dominant wavelength below 510nm, preferably below 500nm.

6. Sheet of glass according to any one of the preceding claims, **characterized in that** the composition has a redox below 0.25 and more preferably below 0.20.

7. Sheet of glass according to any one of the preceding claims, **characterized in that** the composition comprises a content of SO₃ above 0.2% by weight relative to the total weight of the glass.

8. Sheet of glass according to any one of the preceding claims, **characterized in that** it is coated with at least one thin transparent, electrically conducting layer.

9. Solar photovoltaic module or mirror for concentrating solar energy, comprising at least one sheet of glass according to one of Claims 1 to 8.

10. Use of copper as oxidizing agent in a process for manufacturing a sheet of glass according to Claims 1 to 9.
